Europäisches Patentamt

European Patent Office

Office européen des brevets

(11) Numéro de publication: **0 302 830**
**A2**

## DEMANDE DE BREVET EUROPEEN

(21) Numéro de dépôt: **88810521.0**

(22) Date de dépôt: **27.07.88**

(51) Int. Cl.⁴: **A 01 K 89/015**

(30) Priorité: **03.08.87 CH 2969/87**

(43) Date de publication de la demande:
**08.02.89 Bulletin 89/06**

(84) Etats contractants désignés:
**AT BE DE ES FR GB GR IT LU NL SE**

(71) Demandeur: **Schmidt, Daniel**
**8, avenue du Petit-Lancy**
**CH-1213 Petit-Lancy (CH)**

**Wetzel, Rodolphe**
**30, rue des Grottes**
**CH-1201 Genève (CH)**

(72) Inventeur: **Schmidt, Daniel**
**8, avenue du Petit-Lancy**
**CH-1213 Petit-Lancy (CH)**

**Wetzel, Rodolphe**
**30, rue des Grottes**
**CH-1201 Genève (CH)**

(74) Mandataire: **Ardin, Pierre et al**
**PIERRE ARDIN & CIE 22, rue du Mont-Blanc**
**CH-1201 Genève (CH)**

(54) **Moulinet de pêche et canne à pêche.**

(57) La canne à pêche (8) est équipée d'un moulinet comprenant un tube (1) monté en rotation à l'intérieur de la canne, ce tube supportant une bobine (2) qui en est solidaire et porte la ligne à pêche (3), un élastique (14) étant logé dans le tube et la canne de façon à être tendu lorsque le tube est entraîné en rotation dans un premier sens par le débit de la ligne à travers une ouverture dans la canne, un frein à friction (16) empêchant la rotation du tube, ce frein pouvant être relâché de l'extérieur pour permettre le rembobinage de la ligne. Cette disposition permet une encombrement et poids réduits de la canne à pêche, un fonctionnement fiable et un montage simple et rapide.

EP 0 302 830 A2

**Description**

## MOULINET DE PECHE ET CANNE A PECHE

L'invention se rapporte à un moulinet de pêche comprenant une bobine sur laquelle est enroulée la ligne et un dispositif de récupération pour le rembobinage de cette ligne.

Dans les cannes à pêche connues, les moulinets permettant le débit et le rembobinage de la ligne sont prévus pour être fixés à l'extrémité de la canne à pêche. Leur poids contribue cependant de façon non négligeable au poids total de cette canne et leur fixation extérieure à la canne est encombrante et gêne considérablement le maniement et le transport de la canne à pêche.

Le but de l'invention est de réaliser un moulinet de pêche d'un poids réduit et pouvant équiper une canne à pêche sans augmenter de façon sensible son volume extérieur. A cet effet, le moulinet selon l'invention est caractérisé en ce qu'il est conformé de façon à pouvoir être logé à l'intérieur d'une canne à pêche.

L'invention a également pour but de réaliser une canne à pêche d'un poids et encombrement minimum, particulièrement adaptée pour la pêche à la mouche. A cet effet, la canne à pêche selon l'invention, équipée d'un moulinet comprenant une bobine sur laquelle est enroulée la ligne et un dispositif de récupération pour le rembobinage de cette ligne, est caractérisée en ce que le moulinet est logé à l'intérieur de la canne à pêche, la ligne étant débitée par une ouverture dans la paroi de celle-ci, des moyens étant prévus pour actionner le dispositif de récupération permettant le rembobinage automatique de la ligne débitée.

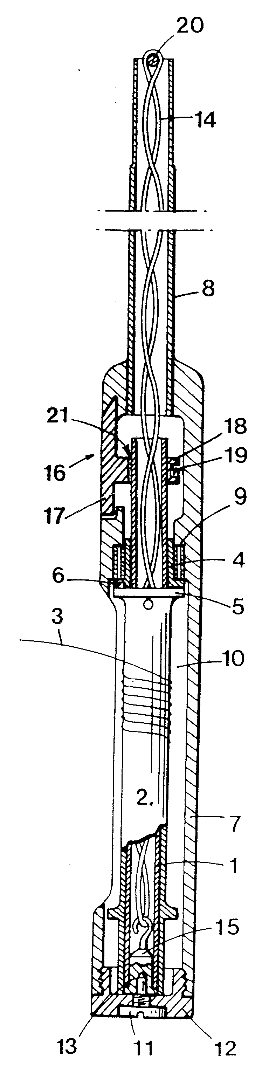

Le dessin annexé représente schématiquement et à titre d'exemple une forme d'exécution de l'objet de l'invention.

La figure unique est une vue partielle en coupe de la canne à pêche et du moulinet selon l'invention.

La canne 8 comporte un moulinet constitué par un tube 1 servant de support à une bobine 2 sur laquelle est enroulée la ligne à pêche 3. La bobine 2 est montée sur la partie arrière du tube 1, celui-ci étant solidaire d'un manchon 4 se terminant par un flasque qui sert d'appui à un flasque 5 de la bobine. Ce dernier est muni d'un doigt 6 destiné à s'engager dans un trou prévu dans le flasque du manchon 4 pour rendre la bobine 2 solidaire du tube 1. Ce tube portant la bobine est logé de façon tournante dans une cavité 10 de la poignée 7 de la canne à pêche 8. Un roulement à aiguilles 9 est logé entre le manchon 4 et la paroi intérieure de la poignée 7, de façon à permettre un centrage de la partie avant du tube 1 par rapport à l'axe de la canne 8. La partie arrière de la poignée 7 comporte un bouchon de fermeture 12 de la cavité 10. Ce bouchon de fermeture 12 est muni d'une vis 11 qui pénètre dans un trou d'une pièce-bouchon 13 du tube 1, pour ainsi assurer le centrage de la partie arrière de ce tube.

Un élastique 14 est disposé à l'intérieur du tube 1 de la canne 8 et fixé par une de ses extrémités à la pièce-bouchon 13, par l'intermédiaire d'un crochet d'ancrage 15. L'autre extrémité de l'élastique 14 est fixée par une goupille 20 à la canne 8.

La poignée 7 porte en outre un frein à friction 16 comprenant une pièce 17 en forme de patte accessible de l'extérieur et un prolongement 18 présentant un alésage 21 dans lequel est logée avec jeu la partie avant du tube 1. Une partie de la paroi de l'alésage 21 est maintenue contre le tube 1, de façon à bloquer son mouvement grâce à un ressort 19 disposé entre la paroi de la cavité 10 et un logement prévu à cet effet dans le prolongement 18. Lorsque l'on appuie de l'extérieur sur la patte 17 contre l'action du ressort 19, le tube 1 peut tourner librement dans l'alésage susmentionné.

Le moulinet logé à l'intérieur de la canne fonctionne de la façon suivante : lorsqu'on dévide la ligne 3 par l'ouverture latérale de la poignée 7, le tube 1 et la bobine 2 sont entraînés en rotation simultanée dans un premier sens. En même temps, l'élastique 14 est soumis à une torsion tendant à entraîner le tube 1 en rotation en sens contraire au premier, cette rotation étant cependant empêchée par le frein à friction 16. En appuyant sur la partie 17 du frein 16 pour libérer son action, l'énergie potentielle de l'élastique 14 entraîne alors le tube 1 et la bobine 2 en rotation dans le sens contraire au premier, provoquant ainsi le rembobinage automatique de la ligne débitée.

Le moulinet décrit permet de réaliser une canne à pêche d'un poids réduit, le tube 1 et la bobine 2 pouvant être en matière synthétique et la poignée 7 en liège, par exemple. Le bouchon de fermeture 12 permet le remplacement de la bobine comportant la ligne à pêche d'une façon très aisée, sans avoir besoin de démonter les autres parties du moulinet.

Il va de soit que l'invention ne se limite pas à la forme d'exécution décrite et qu'elle peut englober toutes les variantes à la portée des revendications annexes. En particulier, il est clair que le tube 1 peut être supprimé, la pièce-bouchon 13 s'engageant directement dans le moyeu de la bobine 2. La flasque 5 de cette bobine pourrait alors être solidaire d'une rondelle de freinage susceptible de coopérer avec un bouton de commande de freinage.

Par ailleurs, le crochet 15 peut être remplacé par tout autre moyen de fixation. Alternativement, l'organe élastique 14 pourrait être disposé de façon différente de celle représentée, pour autant que l'une des extrémités de cet organe soit fixée à une partie de la canne pouvant être entraînée en rotation simultanée avec la bobine 2 et que l'autre extrémité de cet organe soit attachée à une partie fixe de cette canne. On pourrait par exemple fixer l'extrémité arrière de cet organe à la rondelle de freinage précitée, l'autre extrémité de l'organe étant attachée à la canne. Ce mode d'exécution est particulièrement avantageux dans la mesure où il rend extrêmement facile le remplacement de la bobine 2.

Finalement, il est clair que l'on peut prévoir de réaliser le moulinet indépendamment de la canne en l'équipant de moyens d'adaptation à des cannes de différents diamètres. A cet effet, le moulinet peut présenter une extrémité filetée ou munie d'une bague d'adaptation ou tout autre moyen adapté au but précité.

## Revendications

1. Moulinet de pêche, comprenant une bobine sur laquelle est enroulée la ligne et un dispositif de récupération pour le rembobinage de cette ligne, **caractérisé** en ce qu'il est conformé de façon à pouvoir être logé à l'intérieur d'une canne à pêche.

2. Moulinet selon la revendication 1, **caractérisé** en ce qu'il comprend un corps creux dans lequel est logée la bobine, la ligne étant débitée par une ouverture dans la paroi du corps creux, des moyens étant prévus pour actionner le dispositif de récupération permettant le rembobinage automatique de la ligne débitée.

3. Moulinet selon la revendication 2, **caractérisé** en ce que la bobine est montée de façon tournante à l'intérieur du corps creux, le débit de la ligne par ladite ouverture entraînant cette bobine en rotation dans un premier sens, le dispositif de récupération comprenant un organe élastique coopérant avec la bobine de façon que la rotation de cette bobine dans ledit premier sens engendre une torsion de l'organe élastique pour le tendre.

4. Moulinet selon la revendication 3, **caractérisé** en ce que le dispositif de récupération comprend un organe de freinage destiné à empêcher la rotation de la bobine, une partie de cet organe de freinage étant accessible de l'extérieur pour permettre de libérer son action de freinage de façon à engendrer le rembobinage automatique de la ligne sous l'action de l'organe élastique.

5. Moulinet selon la revendication 3, **caractérisé** en ce qu'il comprend une pièce-bouchon engagée dans une extrémité du moyeu de la bobine et solidaire de celle-ci, l'organe élastique étant fixé par une de ses extrémités à cette pièce-bouchon, l'autre extrémité de cet organe élastique étant attachée à une partie fixe du moulinet ou de la canne à pêche, la face extérieure de ladite pièce-bouchon présentant un alésage destiné à servir de palier pour un organe de centrage de la bobine.

6. Canne à pêche comportant un moulinet selon l'une des revendications précédentes.

7. Canne à pêche équipée d'un moulinet comprenant une bobine sur laquelle est enroulée la ligne et un dispositif de récupération pour le rembobinage de cette ligne, **caractérisée** en ce que le moulinet est logé à l'intérieur de la canne à pêche, la ligne étant débitée par une ouverture dans la paroi de celle-ci, des moyens étant prévus pour actionner le dispositif de récupération permettant le rembobinage automatique de la ligne débitée.

8. Canne selon la revendication 7, **caractérisée** en ce que la bobine est montée de façon tournante à l'intérieur de la canne à pêche, le débit de la ligne par ladite ouverture entraînant cette bobine en rotation dans un premier sens, le dispositif de récupération comprenant un organe élastique coopérant avec la bobine de façon que la rotation de cette bobine dans ledit premier sens engendre une torsion de l'organe élastique pour le tendre.

9. Canne selon la revendication 8, **caractérisée** en ce que le dispositif de récupération comprend un organe de freinage destiné à empêcher la rotation de la bobine, une partie de cet organe de freinage étant accessible de l'extérieur pour permettre de libérer son action de freinage, de façon à engendrer le rembobinage automatique de la ligne sous l'action de l'organe élastique.

10. Canne selon la revendication 8, **caractérisée** en ce que le moulinet comprend une pièce-bouchon engagée dans une extrémité du moyeu de la bobine et solidaire de celle-ci, l'organe élastique étant fixé par une de ses extrémités à cette pièce-bouchon, l'autre extrémité de cet organe étant attachée à une partie fixe de la canne ou du moulinet, la face extérieure de ladite pièce-bouchon présentant un alésage destiné à servir de palier pour un organe de centrage de la bobine.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| Y | US-A-4 227 659  (R.K. PINDELL) * document complet * | 1 | A 01 K  89/015 |
| A |  | 2 | |
| Y | US-A-4 195 434  (H.H. NEITZKE) * document complet * | 1 | |
| A | --- | 2 | |
| Y | CH-A-  555 136  (F. GIRALDEZ) * figures; revendication 1 * | 1 | |
| A | ----- | 2 | |

|  | DOMAINES TECHNIQUES RECHERCHES (Int. Cl.3) |
|---|---|
|  | A 01 K  89/00 |

Le présent rapport a été établi pour toutes les revendications

| Lieu de la recherche | Date d'achèvement de la recherche | Examinateur |
|---|---|---|
| BERLIN | 25-10-1988 | WUNDERLICH J E |

EPO FORM 1503 03.82 (P0402)